# EUROPÄISCHE PATENTSCHRIFT

(11) **EP 0 838 485 B1**
(45) Veröffentlichungstag und Bekanntmachung des Hinweises auf die Patenterteilung: **26.04.2000**
(21) Anmeldenummer: 97115079.2
(22) Anmeldetag: 01.09.1997
(51) Int. Cl.: C08G 6/02, C08G 12/44

(54) **Hydrophile verseifungsstabil veresterte Kunstharze, besonders geeignet für wässrige Systeme**
Esterified hydrophilic resins stable to saponification and particularly suited for aqueous systems
Résines hydrophiles ésterifiées stables à la saponification spécialement adaptées aux systèmes aqueux

(30) Priorität: 23.10.1996 DE 19643703
(43) Veröffentlichungstag der Anmeldung: 29.04.1998
(73) Patentinhaber: Degussa-Hüls Aktiengesellschaft, 60287 Frankfurt am Main (DE)
(72) Erfinder: Lange, Hartwig, Dr., 45721 Haltern (DE)

(56) Entgegenhaltungen:
- EP-A- 0 668 301
- DE-A- 1 545 164
- DE-A- 2 441 935

## Beschreibung

Die Erfindung betrifft hydrophile verseifungsstabil veresterte Kunstharze für wäßrige Systeme, ein Verfahren zu deren Herstellung und deren Verwendung

Erfindungsgemäße Kunstharze werden erhalten, indem man bekannte hydroxylhaltige Keton-, Keton/Aldehyd-, Harnstoff/Aldehyd-Kunstharze oder deren hydrierte Folgeprodukte (vgl. Ullmann's Encyclopedia of Industrial Chemistry, VCH Verlagsgesellschaft mbH, Weinheim 1993, Vol. 23, S. 99 - 105) mit Polycarbonsäuren und/oder -anhydriden nur so weit umsetzt, daß eine chemische Anbindung nur über einen begrenzten Teil der vorhandenen oder potentiellen Säurefunktionen erfolgt und weitere Carboxylfunktionen unumgesetzt als hydrophile Gruppen erhalten bleiben und so die Wasserlöslichkeit, Wasserverdünnbarkeit bzw. Wasserdispergierbarkeit des auf diese Weise hydrophil modifizierten Kunstharzes ermöglichen.

Bekannt nach dem Stand der Technik ist allgemein die verseifungsstabile Addition hydrophiler Carboxylgruppen mit Hilfe von z. B. Maleinsäureanhydrid an entsprechende konjugierte oder isolierte Doppelbindungen enthaltende Harze auf ganz anderem Reaktionsweg über eine Diels-Alder-Reaktion (DE 24 41 935) - nicht durch Esterbildung. Somit ist das Verfahren auf Kunstharze beschränkt, die eine Diels-Alder-Reaktion eingehen können.

In DE 25 42 090 werden Sulfonsäuregruppen tragende wasserlösliche Verbindungen beschrieben, die abweichend vom erfindungsgemäßen Verfahren in einer gemeinsamen Kondensationsreaktion aus Cycloalkanon, Formaldehyd und Alkalibisulfit erhältlich sind.

In DE 31 44 673 werden wasserlösliche Kondensationsprodukte aufgeführt, die ebenfalls durch gemeinsame Umsetzung von Ketonen, Aldehyden und Säuregruppen einführende Verbindungen erhalten werden. Beispiele für letztere sind Sulfite, Amidosulfonsäure-, Aminoessigsäure- und Phosphorigsäuresalze.

Beide Verfahren nach DE 25 42 090 und DE 31 44 673 ergeben Produkte mit nachteiligem hohen Elektrolytgehalt (z. B. Na⁺), die in Beschichtungssystemen deshalb nicht einsetzbar sind: Der hohe Elektrolytgehalt mindert den wichtigen Korrosionsschutz von Lacken.

DE 34 06 473 sowie DE 34 06 474 bzw. EP 0 154 835 beschreiben ein Verfahren zur Herstellung von stabilen wäßrigen Dispersionen von Harnstoff/Aldehyd-Harzen bzw. Keton/(Aldehyd)-Harzen, wonach man die Harzschmelze oder deren hochkonzentrierte Lösung in Gegenwart von organischen Schutzkolloiden ggf. unter Zusatz von Emulgatoren in Wasser dispergiert.

Nachteilig an diesen Verfahren nach DE 34 06 473 und DE 34 06 474 ist die Tatsache, daß die organischen Schutzkolloide und ggf. Emulgatoren die Anwendung der wäßrigen Keton/(Aldehyd)- bzw. Harnstoff/Aldehyd-Kunstharze im Beschichtungssektor stören: Die hydrophilen Schutzkolloide und ggf. Emulgatoren verbleiben in der Beschichtung und machen sie so feuchtigkeitsempfindlich: Die Beschichtung quillt bei Feuchtigkeitseinwirkung, verliert an Härte und büßt an Korrosionsschutzwirkung ein

Während wasserunlösliche Keton-, Keton/Aldehyd- bzw. Harnstoff/Aldehyd-Kunstharze und deren hydrierte Folgeprodukte seit langem bekannt sind (vgl. Ullmann's Encyclopedia of Industrial Chemistry, VCH Verlagsgesellschaft mbH, Weinheim 1993, Vol. 23, S. 99 - 105), sind verseifungsstabile, mit Polycarbonsäuren und/oder -anhydriden veresterte Keton-, Keton/Aldehyd- bzw. Harnstoff/Aldehyd-Kunstharze oder deren hydrierte Folgeprodukte für wäßrige Systeme nicht bekannt.

Gegenstand der vorliegenden Erfindung sind hydrophile verseifungsstabile Kunstharze. insbesondere für wäßrige Systeme, erhältlich durch Umsetzung von hydroxylfunktionellen Keton-, Keton/Aldehyd- und/oder Harnstoff/Aldehyd-Kunstharzen und/oder deren hydrierte Folgeprodukte mit Polycarbonsäuren, Polycarbonsäureanhydriden, Polycarbonsäureestern und/oder Polycarbonsäurehalogeniden, wobei die angebundenen Polycarbonsäuren und/oder Derivate zu 70 - 100 % nur über eine einzige Funktion mit dem Kunstharz über eine Esterbindung chemisch verknüpft sind und zu 0 - 30 % über mehr als eine Funktion.

Die Erfindung ist insofern überraschend und stellt einen technischen Fortschritt dar, als gemäß DE 24 41 935 aus hydroxylgruppentragenden Alkydharzen im Gegensatz zu erfindungsgemäß eingesetzten Keton-, Keton/Aldehyd- oder Harnstoff/Aldehyd-Kunstharzen oder deren hydrierte Folgeprodukte durch Umsetzung mit Polycarbonsäuren bzw. -anhydriden keine lagerungsbeständigen wäßrigen Kunstharze erhältlich sind: Die Halbesterbildung mit Dicarbonsäureanhydriden wird als "wenig stabil" (DE 24 41 935, Text S. 1, Zeilen 18 - 22) charakterisiert, "und die Harze können in neutralisierter wäßriger Lösung die Dicarbonsäure leicht wieder abspalten, wodurch die Wasserlöslichkeit des Harzes verlorengeht" (DE 24 41 935, Text S. 1, Zeilen 19 - 22). Die erfindungsgemäßen Harze ergeben hingegen jedoch sehr stabile neutralisierte wäßrige Lösungen, Verdünnungen bzw. Dispersionen, selbst wenn sie oberhalb Raumtemperatur gelagert werden. Die erfindungsgemäßen hydrophilen Kunstharze verlieren ihre Eigenschaft der Wasserlöslichkeit, Wasserverdünnbarkeit bzw. Wasserdispergierbarkeit über lange Zeit nicht, sondern bilden wäßrige Systeme, die bei Raumtemperatur in geschlossenen Gefäßen sechs Monate gelagert werden können, ohne daß eine Gelierung oder eine Sedimentation von mehr als 1 Masse-% des Harzes erfolgt.

Zur Herstellung der erfindungsgemäßen wasserlöslichen, wasserverdünnbaren bzw. wasserdispergierbaren Produkte geht man von bekannten wasserunlöslichen hydroxyfunktionellen Keton-, Keton/Aldehyd- bzw. Harnstoff/Aldehyd-Kunstharzen bzw. deren hydrierten Folgeprodukten aus, die Erweichungspunkte (nach DIN 53 180) zwischen 60 und 180 °C besitzen und im folgenden Text als Ausgangsharze bezeichnet werden.

Die Herstellung der Ausgangsharze erfolgt nach bekannten Verfahren zumeist durch alkalikatalysierte Kondensation und ist z. B. in folgenden Schriften veröffentlicht: DE 826 974, DE 870 022, DE 890 866, DE 892 975, DE 10 66 020, DE 27 57 176, DE 44 04 809 und EP 0002 793 sowie zusammenfassend in Ullmann's Encyclopedia of Industrial Chemistry, VCH Verlagsgesellschaft mbH, Weinheim 1993, Vol. 23, S. 99 - 105.

Beispielhaft seien als Keton/Aldehyd-Kunstharze genannt Acetophenon-Formaldehyd-Harz (Kunstharz AP, Hüls AG) und dessen hydrierte Folgeprodukte, Kunstharz SK (Hüls AG), Kunstharz BL 1280 (Hüls AG), Methylethylketon-Formaldehyd-Harz (Kunstharz HPK, Hüls AG), Cyclohexanon-Formaldehyd-Harz (Kunstharz CA, Hüls AG), Cyclohexanon-/Trimethylcyclohexanon-Formaldehyd-Harz (Kunstharz TC, Hüls AG), als Ketonharz das Cyclohexanon-Harz (LAROPAL K 80, BASF) und das Harnstoff-Formaldehyd/Isobutyraldehyd-Harz (LAROPAL A 81, BASF).

Geeignete Polycarbonsäuren bzw. -anhydride für die Herstellung der erfindungsgemäßen wäßrigen Kunstharze sind aromatische, araliphatische, cycloaliphatische und aliphatische Polycarbonsäuren bzw. -anhydride. Weniger bevorzugt sind auch andere Derivate der Polycarbonsäuren einsetzbar, wie ihre Ester oder Säurehalogenide.

Für das erfindungsgemäße Verfahren lassen sich auch Kombinationen aus Dicarbonsäuren bzw. -anhydriden mit Tricarbonsäuren bzw. -anhydriden und/oder Tetracarbonsäuren bzw. -dianhydriden verwenden.

Beispiele für geeignete Dicarbonsäuren sind: Oxal-, Malon-, Bernstein-, Methylmalon-, Glutar-, Dimethylmalon-, Adipin-, Pimelin-, Kork-, 2.2-Dimethylglutar-, Azelain-, Trimethyladipin-, Sebacin-, Fumar-, Malein-, Itacon-, Citracon-, Mesacon-, Traumatin-, Mucon-, 1.2-Cyclohexandicarbon-, 1.3-Cyclohexandicarbon-, 1.4-Cyclohexandicarbon-, Norbornandicarbon-, Phthal-, Isophthal-, Terephthal-, 1.4-Naphthalindicarbon-, 2.5-Naphthalindicarbonsäure und Säuren der allgemeinen Formel I 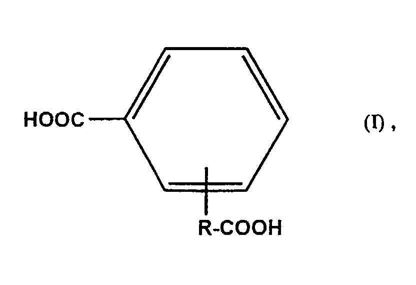 wobei R ein in ortho, meta oder para stehender Alkylrest mit 2 bis 4 C-Atomen bedeutet, wie z. B. Carboxyphenylessigsäure sowie Trimesinsäure als Tricarbonsäure.

Beispiele für besonders geeignete Polycarbonsäureanhydride sind folgende: Phthalsäure-, 1.2-Cyclohexandicarbonsäure-, 4-Methyl-1.2-cyclohexandicarbonsäure-, Tetrahydrophthalsäure-, Trimellitsäure-, Maleinsäure-, Bernsteinsäureanhydrid und Pyromellithsäuredianhydrid.

Die Umsetzung der Ausgangsharze erfolgt mit den Polycarbonsäuren bzw. -anhydriden bevorzugt in der gemeinsamen Schmelze bei 100 - 250 °C unter vermindertem Druck oder unter Durchleiten von Stickstoff, um Kondensationswasser auszutragen. Ggf. kann ein hochsiedendes Lösemittel sowie ggf. ein Veresterungskatalysator, wie vorzugsweise eine Organozinnverbindung, z. B. C₄H₉Sn(OOCC₇H₁₅)₃ (FASCAT 4102), mitverwendet werden. 1 mol Ausgangskunstharz läßt man mit 0,3 bis 3 mol Polycarbonsäure bzw. -anhydrid reagieren, bevorzugt mit 0,5-1,8 mol.

Sowohl beim Ausgangsharz als auch bei der Polycarbonsäure bzw. -anhydrid kann es sich um Stoffgemische verschiedener Ausgangsharztypen bzw. eine Mischung aus mehreren Polycarbonsäuren bzw. -anhydriden handeln. Alle Reaktionspartner können zu Reaktionsbeginn vollständig zusammengegeben werden oder auch über die Reaktionsdauer zueinander dosiert werden, bevorzugt werden verschiedene Polycarbonsäuren bzw. -anhydride jedoch nicht gleichzeitig als Gemisch zudosiert: sondern separat zu unterschiedlichen Reaktionszeiten.

Den Reaktionsfortschritt verfolgt man über die Säurezahl (gemäß DIN 53 402) und bricht die Reaktion vorteilhafterweise frühestens ab, wenn man diejenige Säurezahl erreicht, die man theoretisch erwartet, wenn alle Polycarbonsäuremoleküle mindestens über eine Esterbindung an das Ausgangsharz angebunden sind. Polycarbonsäuremoleküle unangebunden im Gemisch zu belassen ist möglich, technisch jedoch nachteilig und daher nicht angestrebt.

Zur Überführung der mit Carbonsäurefünktionen hydrophil modifizierten Kunstharze ins wäßrige Medium neutralisiert man diese mit organischen und/oder anorganischen Basen wie Ammoniak und Hydrazin. Vorzugsweise werden primäre, sekundäre und tertiäre Amine, wie z. B. Ethylamin, Propylamin, Dimethylamin, Dibutylamin, Cyclohexylamin, Benzylamin, Morpholin, Piperidin und Triethanolamin, verwendet.

Besonders bevorzugt werden tertiäre Amine als Neutralisationmittel eingesetzt, insbesondere Dimethylethanolamin, Triethylamin, Tripropylamin und Tributylamin.

Die Neutralisationsmittelmenge richtet sich nach dem Carboxylgruppengehalt des hydrophilen Kunstharzes und beträgt vorteilhafterweise 50 - 130 % der Neutralisationsmittelmenge, die für eine stöchiometrische Neutralisation notwendig sind.

Das neutralisierte hydrophile Kunstharz leitet man entweder in Wasser ein oder versetzt jenes bevorzugterweise mit Wasser. Dies kann bei 20 - 150 °C, bevorzugt 50 - 100 °C, mit der Kunstharzschmelze erfolgen oder mit 50 - 95%igen, vorzugsweise 60 - 80%igen, Lösungen des hydrophilen Kunstharzes in geeigneten Lösemitteln.

Geeignete Lösemittel sind entweder solche, die einen Siedepunkt unter 100 °C besitzen und sich destillativ aus dem fertigen wäßrigen System wieder vollständig abtrennen lassen, wie Aceton, Methylethylketon oder Tetrahydrofuran, oder auch ggf. höhersiedende, die im wasserverdünnbaren System verbleiben, wie Butylglykol, Butyldiglykol oder N-Methylpyrrolidon.

Gegenstand der Erfindung ist außerdem die Verwendung der erfindungsgemäßen hydrophil modifizierten Kunstharze oder ihrer wäßrigen Lösungen, Verdünnungen oder Dispersionen als Zusatzmittel für wäßrige Beschichtungssysteme als Verdickungsmittel, Dispergierhilfsmittel für anorganische und organische Pigmente, zur Erhöhung des Feststoffgehaltes von Lacksystemen, zur Verbesserung des Glanzes und der Fülle, zur Steigerung der Härte der Beschichtung, zur Verbesserung des Verlaufes und der Haftung von Beschichtungen auf metallischen Substraten sowie als Mittel zur schnelleren Trocknung von Beschichtungssystemen zur schnelleren Abnahme der Oberflächenklebrigkeit. Außerdem eignen sich die erfindungsgemäßen Harze als Zusatzmittel für Druckfarben, Tinten, Kugelschreiberpasten und Klebstoffe.

Die folgenden Beispiele dienen der näheren Erläuterung der Erfindung:

### Beispiel 1

Man rührt eine Schmelze aus 228 g Kunstharz BL 1280 (bzgl. der Ketofunktion und des aromatischen Ringes hydriertes Acetophenon/Formaldehyd-Harz (Herstellung gemäß DE 826 974 oder DE 870 022, Molmasse (dampfdruckosmometrisch) 830 g/mol, Hüls AG)) und 37 g 1.2-Cyclohexandicarbonsäureanhydrid 7,5 Stunden bei 150 °C unter Durchleiten von Stickstoff, bis eine Säurezahl von 51 mg KOH/g erreicht wird. Das entstandene Harz löst man in 175 g Methylethylketon, neutralisiert mit 23 g Dimethylaminoethanol und dispergiert durch Zugabe von 1000 g voll entsalzenem Wasser. Methylethylketon destilliert man unter wirksamem Rühren ab und engt so weit ein, bis man eine 25 Masse-% Feststoff enthaltende wäßrige Kunstharz-Dispersion erhält. Die niedrigviskose milchig-weiße Dispersion besitzt einen pH-Wert von 9,9 und läßt sich bei Raumtemperatur länger als sechs Monate, bei 60 °C länger als 14 Tage, lagern, ohne daß mehr als 1 % des Harzes sedimentiert.

### Beispiel 2

Man rührt eine Schmelze aus 1350 g Kunstharz SK (bzgl. der Ketonfunktion hydriertes Acetophenon/Formaldehyd-Kunstharz, Hüls AG, Herstellung gemäß DE 826 974 und/oder DE 870 022) und 231 g 1,2-Cyclohexandicarbonsäureanhydrid 1,5 Stunden bei 160 - 170 °C und einem auf 50 - 60 hPa reduziertem Druck, bis man eine Säurezahl von 54 mg KOH/g erreicht. Anschließend setzt man 55 g Pyromellithsäuredianhydrid hinzu und rührt weitere 1,5 Stunden bei 180 - 200 °C und einem auf 50 - 60 hPa reduziertem Druck, bis sich eine Säurezahl von 58 mg KOH/g einstellt. Das entstandene Harz löst man bei 55 °C in 1000 g Aceton und neutralisiert mit 157 g Dimethylaminoethanol. Anschließend dispergiert man bei 60 °C unter wirksamem Rühren durch Zugabe von 4700 g voll entsalzenem Wasser und destilliert Aceton und überschüssiges Wasser unter wirksamem Rühren ab, bis die Dispersion einen Festkörpergehalt von 38 Masse-% erreicht. Die niedrigviskose Dispersion sieht milchig weiß aus, besitzt einen pH-Wert von 9,25 und läßt sich in geschlossenen Behältern länger als 14 Tage bei 60 °C und länger als sechs Monate bei Raumtemperatur lagern, ohne daß mehr als 1 Masse-% des Harzes sedimentiert.

### Beispiel 3

Eine Schmelze aus 225 g Kunstharz SK (siehe Beispiel 2) und 38,5 g 1,2-Cyclohexandicarbonsäureanhydrid rührt man eine Stunde bei 160 °C und einem auf 50 - 60 hPa reduziertem Druck, bis eine Säurezahl von 54 mg KOH/g gefunden wird. Man setzt weitere 38,5 g 1,2-Cyclohexandicarbonsäureanhydrid hinzu und rührt bei 180 - 200 °C sieben weitere Stunden bei 50 - 60 hPa, bis das Harz eine Säurezahl von 72 mg KOH/g besitzt. Das entstandene Harz löst man bei 55 °C in 200 g Aceton, neutralisiert mit 36 g Dimethylaminoethanol und dispergiert bei 55 °C mit 670 g Wasser. Aceton und überschüssiges Wasser destilliert man unter wirksamen Rühren ab, bis die Dispersion einen Feststoffgehalt von 33 Masse-% besitzt. Die niedrigviskose milchig weiße Dispersion besitzt einen pH-Wert von 9,3 und läßt sich im geschlossenen Behälter länger als 14 Tage bei 60 °C und länger als sechs Monate bei Raumtemperatur lagern, ohne daß mehr als 1 Masse-% des Harzes sedimentiert.

## Patentansprüche

1. Hydrophile verseifungsstabile Kunstharze erhältlich durch Umsetzung von hydroxylfunktionellen Keton-, Keton/Aldehyd- und/oder Harnstoff/Aldehyd-Kunstharzen und/oder deren hydrierte Folgeprodukte mit Polycarbonsäuren, Polycarbonsäureanhydriden, Polycarbonsäureestern und/oder Polycarbonsäurehalogeniden, wobei die angebundenen Polycarbonsäuren und/oder Derivate zu 70 - 100 % nur über eine einzige Funktion mit dem Kunstharz über eine Esterbindung chemisch verknüpft sind und zu 0 - 30 % über mehr als eine Funktion.

2. Hydrophile verseifungsstabile Kunstharze nach Anspruch 1,
dadurch gekennzeichnet,
daß es zu 80 - 100 % nur über eine Funktion mit dem Kunstharz über eine Esterbindung chemisch verknüpft ist und zu 0 - 20 % über mehr als eine Funktion.

3. Hydrophile verseifungsstabile Kunstharze nach den Ansprüchen 1 und 2,
dadurch gekennzeichnet,
daß als Kunstharze Acetophenon-Formaldehyd-Harz, Methylethylketon-Formaldehyd-Harz, Cyclohexanon-Formaldehyd-Harz, Cyclohexanon-/Trimethylcyclohexanon-Formaldehyd-Harz, Cyclohexanon-Harz und/oder Harnstoff-Formaldehyd/Isobutyraldehyd-Harz eingesetzt werden.

4. Hydrophile verseifungsstabile Kunstharze nach den Ansprüchen 1 bis 3,
dadurch gekennzeichnet,
daß als Polycarbonsäure Oxal-, Malon-, Bernstein-, Methylmalon-, Glutar-, Dimethylmalon-, Adipin-, Pimelin-, Kork-, 2.2-Dimethylglutar-, Azelain-, Trimethyladipin-, Sebacin-, Fumar-, Malein-, Itacon-, Citracon-, Mesacon-, Traumatin-, Mucon-, 1.2-Cyclohexandicarbon-, 1.3-Cyclohexandicarbon-, 1.4-Cyclohexandicarbon-, Norbornandicarbon-, Phthal-, Isophthal-, Terephthal-, 1.4-Naphthalindicarbon-, 2.5-Naphthalindicarbonsäure und/oder Säuren der allgemeinen Formel I 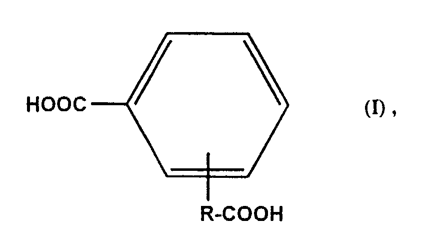 wobei R ein in ortho, meta oder para stehender Alkylrest mit 2 bis 4 C-Atomen bedeutet, eingesetzt werden.

5. Hydrophile verseifungsstabile Kunstharze nach Anspruch 4,
dadurch gekennzeichnet,
daß als Säuren der Formel I Carboxyphenylessigsäure oder Trimesinsäure eingesetzt werden.

6. Hydrophile verseifungsstabile Kunstharze nach den Ansprüchen 1 bis 5,
dadurch gekennzeichnet,
daß als Polycarbonsäureanhydride Phthalsäure-, 1.2-Cyclohexandicarbonsäure-, 4-Methyl-1.2-cyclohexandicarbonsäure-, Tetrahydrophthalsäure-, Trimellitsäure-, Maleinsäure-, Bernsteinsäureanhyrid und/oder Pyromellithsäuredianhydrid eingesetzt werden.

7. Wäßrige Systeme aus hydrophilen Kunstharzen gemäß den Ansprüchen 1 bis 6.

8. Verfahren zur Herstellung verseifungsstabiler hydrophiler Kunstharze
dadurch gekennzeichnet,
daß Keton-, Keton/Aldehyd- bzw. Harnstoff/Aldehyd-Kunstharze und/oder deren hydrierte Folgeprodukte mit Polycarbonsäuren, Polycarbonsäureanhydriden, Polycarbonsäureestern und/oder Polycarbonsäurehalogeniden oder Gemischen aus diesen in Schmelze oder Lösung so umgesetzt werden, daß diese zu 70 - 100 % nur über eine Funktion mit dem Kunstharz über eine Esterbindung chemisch verknüpft sind und zu 0 - 30 % über mehr als eine Funktion, wobei pro mol Kunstharz 0,3 - 3 mol, bevorzugt 0,5 - 1,8 mol Polycarbonsäuren und/oder Derivate zur Reaktion kommen.

9. Verfahren zur Herstellung eines verseifungsstabilen hydrophilen Kunstharzes
dadurch gekennzeichnet,
daß Keton-, Keton/Aldehyd- bzw. Harnstoff/Aldehyd- Kunstharze und/oder deren hydrierte Folgeprodukte mit Polycarbonsäuren, Polycarbonsäureanhydriden, Polycarbonsäureestern und/oder Polycarbonsäurehalogeniden oder Gemischen aus diesen in Schmelze oder Lösung so umgesetzt werden, daß diese zu 80 - 100 % nur über eine Funktion mit dem Kunstharz über eine Esterbindung chemisch verknüpft sind und zu 0 - 20 % über mehr als eine Funktion, wobei pro mol Kunstharz 0,3 - 3 mol, bevorzugt 0,5 - 1,8 mol Polycarbonsäuren und/oder Derivate zur Reaktion kommen..

10. Verfahren zur Herstellung eines wäßrigen Systems aus verseifungsstabilen hydrophilen Kunstharzen gemäß den Ansprüchen 1 bis 6,
dadurch gekennzeichnet,
daß man die neutralisierte Schmelze oder Lösung des Kunstharzes mit Wasser versetzt oder in Wasser einleitet.

11. Verfahren nach Anspruch 10,
dadurch gekennzeichnet,
daß Amine zur Neutralisation eingesetzt werden.

12. Verwendung der verseifungsstabilen hydrophilen Kunstharze oder aus ihnen hergestellten wäßrigen Systeme als Zusatzmittel für wäßrige Beschichtungssysteme, Druckfarben, Tinten und/oder Farbpasten als Verdickungsmittel, Dispergierhilfsmittel für anorganische und organische Pigmente, zur Erhöhung des Feststoffgehaltes von Lacksystemen, zur Verbesserung des Glanzes und der Fülle, zur Steigerung der Härte der Beschichtung, zur Verbesserung des Verlaufes und der Haftung von Beschichtungen auf metallischen Substraten sowie als Mittel zur schnelleren Trocknung von Beschichtungssystemen zur schnelleren Abnahme der Oberflächenklebrigkeit.

## Claims

1. Hydrophilic, hydrolysis-stable synthetic resins obtainable by reacting hydroxyl-functional ketone, ketone/aldehyde and/or urea/aldehyde synthetic resins and/or hydrogenated follow-on products thereof with polycarboxylic acids, polycarboxylic anhydrides, polycarboxylic esters and/or polycarbonyl halides, 70 - 100% of the attached polycarboxylic acids and/or derivatives being linked chemically via an ester linkage to the synthetic resin by way of only one single function and 0-30% of said acids and/or derivatives being so linked by way of more than one function.

2. Hydrophilic, hydrolysis-stable synthetic resins according to claim 1, characterized in that 80 - 100% is linked chemically via an ester linkage to the synthetic resin by way of only one function and 0 - 20% is so linked by way of more than one function.

3. Hydrophilic, hydrolysis-stable synthetic resins according to either of claims 1 and 2, characterized in that acetophenone-formaldehyde resin, methyl ethyl ketone-formaldehyde resin, cyclohexanone - formaldehyde resin, cyclohexanone/ trimethylcyclohexanone-formaldehyde resin, cyclohexanone resin and/or urea-formaldehyde/iso butyraldehyde resin are employed as synthetic resins.

4. Hydrophilic, hydrolysis-stable synthetic resins according to any of claims 1 to 3, characterized in that oxalic, malonic, succinic, methylmalonic, glutaric, dimethylmalonic, adipic, pimelic, suberic, 2,2-dimethylglutaric, azelaic, trimethyladipic, sebacic, fumaric, maleic, itaconic, citraconic, mesaconic, traumatic, muconic, 1,2 -cyclohexanedicarboxylic, 1,3-cyclohexanedicarboxylic, 1, 4-cyclohexanedicarboxylic, norbornanedicarboxylic, phthalic, isophthalic, terephthalic, 1,4-naphthalenedicarboxylic, 2,5-naphthalenedicarboxylic and/or acids of the general formula I 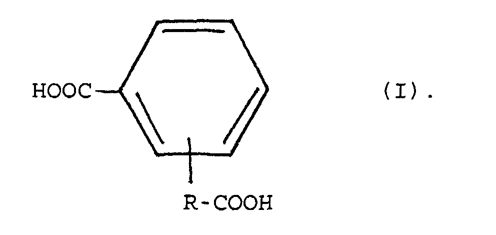 in which R is an alkyl radical having 2 to 4 C atoms which is in ortho, meta or para position are employed as polycarboxylic acid.

5. Hydrophilic, hydrolysis-stable synthetic resins according to claim 4, characterized in that carboxy-phenylacetic acid or trimesic acid are employed as acids of the formula I.

6. Hydrophilic, hydrolysis-stable synthetic resins according to any of claims 1 to 5, characterized in that phthalic, 1, 2-cyclohexanedicarboxylic, 4-methyl - 1,2 -cyclohexanedicarboxylic, tetrahydrophthalic, trimellitic, maleic, succinic anhydrides and/or pyromellitic dianhydride are employed as polycarboxylic anhydrides.

7. Aqueous systems comprising hydrophilic synthetic resins according to any of claims 1 to 6.

8. A process for preparing hydrolysis-stable hydrophilic synthetic resins, characterized in that ketone, ketone/aldehyde and/or urea/aldehyde synthetic resins and/or hydrogenated follow-on products thereof are reacted with polycarboxylic acids, polycarboxylic anhydrides, polycarboxylic esters and/or polycarbonyl halides or mixtures of these, in melt or solution, in such a way that 70-100% of these are linked chemically via an ester linkage to the synthetic resin by way of only one function and 0 - 30% of these are so linked by way of more than one function, and 0.3 - 3 mol, preferably 0.5 - 1.8 mol, of polycarboxylic acids and/or derivatives are reacted per mole of synthetic resin.

9. A process for preparing a hydrolysis-stable hydrophilic synthetic resin, characterized in that ketone, ketone/aldehyde and/or urea/aldehyde synthetic resins and/or hydrogenated follow-on products thereof are reacted with polycarboxylic acids, polycarboxylic anhydrides, polycarboxylic esters and/or polycarbonyl halides or mixtures of these, in melt or solution, in such a way that 80-100% of these are linked chemically via an ester linkage to the synthetic resin by way of only one function and 0 - 20% of these are so linked by way of more than one function, and 0.3 - 3 mol, preferably 0.5 - 1.8 mol, of polycarboxylic acids and/or derivatives are reacted per mole of synthetic resin.

10. A process for preparing an aqueous system comprising hydrolysis-stable hydrophilic synthetic resins according to any of claims 1 to 6, characterized in that water is added to the neutralized melt or solution of the synthetic resin or this melt or solution is passed into water.

11. A process according to claim 10, characterized in that amines are employed for neutralization.

12. The use of hydrolysis-stable hydrophilic synthetic resins or of aqueous systems produced from them as an additive for aqueous coating systems, inks, including printing inks, and/or colour pastes, as a thickener, as a dispersing auxiliary for inorganic and organic pigments, for increasing the solids content of coating systems, for improving the gloss and fullness, for increasing the hardness of the coating, for improving the flow and the adhesion of coatings to metallic substrates, and as an agent for the more rapid drying of coatings systems for a more rapid decrease in surface tack.

## Revendications

1. Résines artificielles stables à la saponification, hydrophiles, accessibles par mise en réaction de résines artificielles cétoniques, cétone/aldéhyde et/ou urée/aldéhyde fonctionnalisées par un hydroxyle, et/ou leurs dérivés hydrogénés, avec des acides polycarboxyliques, des anhydrides d'acide polycarboxylique, des esters d'acide polycarboxylique et/ou des halogénures d'acide polycarboxylique, dans lesquelles les acides polycarboxyliques et/ou les dérivés liés sont combinés chimiquement pour 70-100 % seulement par une fonction unique, avec la résine artificielle par l'intermédiaire d'une liaison ester, et pour 0 à 30 % par plus d'une fonction.

2. Résine artificielle stable à la saponification, hydrophile, selon la revendication 1,
caractérisée en ce qu'
elle est combinée chimiquement pour 80 à 100 % seulement par une fonction à la résine artificielle par l'intermédiaire d'une liaison ester, et pour 0 à 20 % par l'intermédiaire de plus d'une fonction.

3. Résine artificielle stable à la saponification, hydrophile, selon les revendications 1 et 2,
caractérisée en ce que
comme résines artificielles on met en oeuvre une résine acétophénone/formaldéhyde, une résine méthyléthylcétone/formaldéhyde, une résine cyclohexanone/formaldéhyde, une résine cyclohexanone/triméthylcyclohexanone-formaldéhyde, une résine de cyclohexanone, et/ou une résine urée-formaldéhyde/isobutyraldéhyde.

4. Résine artificielle stable à la saponification, hydrophile, selon les revendications 1 à 3,
caractérisée en ce qu'
on met en oeuvre comme acide polycarboxylique, l'acide oxalique, l'acide malonique, l'acide succinique, l'acide méthylmalonique, l'acide glutarique, l'acide diméthylmalonique, l'acide adipique, l'acide pimélique, l'acide subérique, l'acide 2,2-diméthylglutarique, l'acide azélaïque, l'acide triméthyladipique, l'acide sébacique, l'acide fumarique, l'acide maléique, l'acide itaconique, l'acide citraconique, l'acide mésaconitique, l'acide traumatique, l'acide mucoïque, l'acide 1,2-cyclohexanedicarboxylique, l'acide 1,3-cyclohexanedicarboxylique, l'acide 1,4-cyclohexanedicarboxylique, l'acide norbornanedicarboxylique, l'acide phtalique, l'acide isophtalique, l'acide téréphtalique, l'acide 1,4-naphtalènedicarboxylique, l'acide 2,5-naphtalènedicarboxylique et/ou des acides de formule générale I : 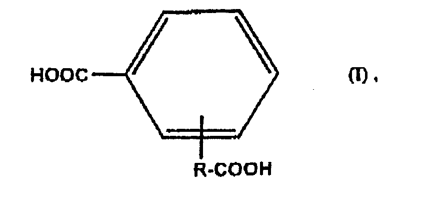 dans laquelle R signifie un radical alkyle situé en ortho, méta ou para, ayant de 2 à 4 atomes de carbone.

5. Résine artificielle stable à la saponification, hydrophile, selon la revendication 4,
caractérisée en ce qu'
on met en oeuvre comme acides de formule I, l'acide carboxy-phénylacétique ou l'acide trimésique.

6. Résine stable à la saponification, hydrophile, selon les revendications 1 à 5,
caractérisée en ce qu'
on met en oeuvre comme anhydrides d'acide polycarboxylique, l'anhydride d'acide phtalique, d'acide 1,2-cyclohexanedicarboxylique, d'acide 4-méthyl-1,2-cyclohexanedicarboxylique, d'acide tétrahydrophtalique, d'acide trimellitique, d'acide maléique, d'acide succinique et/ou le dianhydride d'acide pyromellitique.

7. Systèmes aqueux à base de résines artificielles hydrophiles conformément aux revendications 1 à 6.

8. Procédé de production de résines artificielles hydrophiles stables à la saponification,
caractérisé en qu'
on fait réagir des résines artificielles cétoniques, cétone/aldéhyde ou urée/aldéhyde et/ou leurs dérivés hydrogénés, avec des acides polycarboxyliques, des anhydrides d'acide polycarboxylique, des esters d'acide polycarboxylique, et/ou des halogénures d'acide polycarboxylique ou des mélanges à base de ceux-ci, à l'état fondu ou en solution, de sorte que ceux-ci soient combinés chimiquement pour 70 à 100 % seulement par une fonction avec la résine artificielle par l'intermédiaire d'une liaison ester, et pour 0 à 30 % par plus d'une fonction, dans laquelle par mol de résine artificielle, de 0,3 à 3 mol, de préférence de 0,5 à 1,8 mol d'acide polycarboxylique et/ou de dérivés viennent en réaction.

9. Procédé de production d'une résine artificielle hydrophile stable à la saponification,
caractérisé en ce qu'
on met à réagir des résines artificielles cétoniques, cétone/aldéhyde ou urée/aldéhyde et/ou leurs dérivés hydrogénés avec des acides polycarboxyliques, des anhydrides d'acide polycarboxylique, des esters d'acide polycarboxylique, et/ou des halogénures d'acide polycarboxylique ou des mélanges à base de ceux-ci, à l'état fondu ou en solution de façon que ceux-ci soient combinés chimiquement pour 80 à 100 % seulement par une fonction avec la résine artificielle par l'intermédiaire d'une liaison ester, et pour 0 à 20 % par plus d'une fonction dans laquelle, par mol de résine artificielle de 0,3 à 3 mol, de préférence de 0,5 à 1,8 mol d'acides polycarboxyliques et/ou de leurs dérivés viennent en réaction.

10. Procédé de production d'un système aqueux à base de résines artificielles hydrophiles stables à la saponification conformément aux revendications 1 à 6,
caractérisé en ce qu'
on mélange le produit de fusion ou la solution de résine artificielle avec de l'eau, ou on l'introduit dans de l'eau.

11. Procédé selon la revendication 10,
caractérisé en ce qu'
on met en oeuvre des amines en vue de la neutralisation.

12. Utilisation de résines artificielles hydrophiles stables à la saponification, ou de systèmes aqueux produits à partir de celles-ci, comme additif pour des systèmes de revêtement aqueux, des couleurs d'impression, des encres et/ou des pâtes de colorant, comme agent épaississant, adjuvant de dispersion pour des pigments minéraux et organiques, pour l'augmentation de la teneur en matières solides de systèmes de laques, pour l'amélioration de l'éclat et du remplissage, pour l'élévation de la dureté du revêtement, pour l'amélioration de l'écoulement et de l'adhésion de revêtements sur des substrats métalliques ainsi que comme agent pour le séchage plus rapide de systèmes de revêtement à diminution plus rapide de l'adhésivité de surface.
